# EUROPEAN PATENT APPLICATION

(11) **EP 4 570 710 A1**
(43) Date of publication of application: **18.06.2025**
(21) Application number: 24195040.1
(22) Date of filing: 16.08.2024
(51) Int. Cl.: B65G 1/137, G06Q 10/0631, G06Q 10/08, G06Q 30/0202

(54) **YARN SPINDLE WAREHOUSE MANAGEMENT METHOD AND APPARATUS**

(30) Priority: 13.12.2023 CN 202311720664
(71) Applicant: Zhejiang Hengyi Petrochemical Co., Ltd., Zhejiang 311200 (CN); Taicang Yifeng Chemical Fiber Co.,Ltd., Suzhou Jiangsu 215421 (CN)
(72) Inventor: WANG, Peng, Zhejiang 311200 (CN); PENG, Xiantao, Zhejiang 311200 (CN); QIU, Yibo, Zhejiang 311200 (CN); JIN, Junliang, Zhejiang 311200 (CN); WANG, Dandan, Zhejiang 311200 (CN); WU, Xuan, Zhejiang 311200 (CN); TENG, Zheng, Zhejiang 311200 (CN); GAO, Jiabo, Zhejiang 311200 (CN)
(74) Representative: HGF

(57) **Abstract**

Provided is a yarn spindle warehouse management method and apparatus, relating to the field of chemical fiber intelligent technology. The method includes: in response to reception of a warehousing request of a yarn spindle, obtaining production data and historical sales data of the yarn spindle (S101); inputting the production data and the historical sales data into a prediction model to obtain an estimated delivery time of the yarn spindle (S102); allocating a first target storage location for the yarn spindle based on the estimated delivery time and storage status information of each storage location of a stereoscopic warehouse (S103); and sending a warehousing task carrying a position of the first target storage location to a first stacker, so that the first stacker executes the warehousing task based on the position (S104). The warehousing task is used to instruct to store the yarn spindle to the first target storage location.

## Description

### TECHNICAL FIELD

The present disclosure relates to the field of chemical fiber intelligent technology, and in particular to a yarn spindle warehouse management method and apparatus.

### BACKGROUND

In the field of chemical fiber production, the stereoscopic warehouses are widely used in factories for yarn spindle packaging due to their advantages such as high space utilization and high degree of automation. After the yarn spindle packaging process is completed, the packaged yarn spindles will be stored in a stereoscopic warehouse. However, due to the different production and sales volumes of different yarn spindles, it is difficult to achieve the intelligent management of the stereoscopic warehouse. Therefore, how to realize an intelligent warehouse management mechanism to improve the efficiency of delivery and warehousing tasks of yarn spindles has become a technical problem that needs to be solved urgently.

### SUMMARY

The present disclosure provides a yarn spindle warehouse management method and apparatus.

According to a first aspect of the present disclosure, provided is a yarn spindle warehouse management method, applied to a warehouse management system, including:
in response to reception of a warehousing request of a yarn spindle, obtaining production data and historical sales data of the yarn spindle;
inputting the production data and the historical sales data into a prediction model to obtain an estimated delivery time of the yarn spindle output by the prediction model;
allocating a first target storage location for the yarn spindle based on the estimated delivery time and storage status information of each storage location of a stereoscopic warehouse; and
sending a warehousing task carrying a position of the first target storage location to a first stacker, so that the first stacker executes the warehousing task based on the position of the first target storage location, where the warehousing task is used to instruct to store the yarn spindle to the first target storage location.

According to a second aspect of the present disclosure, provided is a yarn spindle warehouse management apparatus, applied to a warehouse management system, including:
a first obtaining module configured to, in response to reception of a warehousing request of a yarn spindle, obtain production data and historical sales data of the yarn spindle;
an input module configured to input the production data and the historical sales data into a prediction model to obtain an estimated delivery time of the yarn spindle output by the prediction model;
an allocation module configured to allocate a first target storage location for the yarn spindle based on the estimated delivery time and storage status information of each storage location of a stereoscopic warehouse; and
a first sending module configured to send a warehousing task carrying a position of the first target storage location to a first stacker, so that the first stacker executes the warehousing task based on the position of the first target storage location, where the warehousing task is used to instruct to store the yarn spindle to the first target storage location.

According to a third aspect of the present disclosure, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

According to a fourth aspect of the present disclosure, provided is a non-transitory computer-readable storage medium storing a computer instruction thereon, and the computer instruction is used to cause a computer to execute the method according to any one of the embodiments of the present disclosure.

According to the technology of the present disclosure, an intelligent warehouse management mechanism can be established, helping to realize the intelligent management of warehousing and delivery tasks of yarn spindles, and thereby helping to improve the efficiency of delivery and warehousing of yarn spindles.

It should be understood that the content described in this summary is not intended to limit critical or essential features of embodiments of the present disclosure, nor is it used to limit the scope of the present disclosure. Other features of the present disclosure will be easily understood through the following description.

### BRIEF DESCRIPTION OF THE DRAWINGS

The above and other features, advantages and aspects of various embodiments of the present disclosure will become more apparent with reference to the following detailed description in combination with the accompanying drawings. In the accompanying drawings, the same or similar reference numbers represent the same or similar elements.
FIG. 1 is a schematic flow chart of a yarn spindle warehouse management method according to an embodiment of the present disclosure;
FIG. 2 is a schematic diagram of allocating the first target storage location for the yarn spindle according to an embodiment of the present disclosure;
FIG. 3 is a schematic diagram of a sales strategy for obtaining the first type of yarn spindles according to an embodiment of the present disclosure;
FIG. 4 is a schematic diagram of a production strategy for obtaining the second type of yarn spindles according to an embodiment of the present disclosure;
FIG. 5 is a structural schematic diagram of a yarn spindle warehouse management apparatus according to an embodiment of the present disclosure; and
FIG. 6 is a block diagram of an electronic device for implementing the yarn spindle warehouse management method according to an embodiment of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The terms such as "first", "second" and "third" in the embodiments of the specification, the claims and the above-mentioned drawings in the present disclosure are used to distinguish the similar objects, but not necessarily to describe a particular order or sequence. In addition, the terms "include" and "have" and any variations thereof are intended to cover a non-exclusive inclusion. For example, a method, system, product or device containing a series of steps or units is not necessarily limited to those steps or units listed clearly, but may include other steps or units that are not listed clearly or that are inherent to the process, method, product or device.

Before the technical solutions of the embodiments of the present disclosure are introduced, the technical terms that may be used in the present disclosure are further explained:

Stereoscopic warehouse: also known as pallet warehouse or high-bay warehouse, is a warehouse that uses multiple layers, a dozen of layers or even dozens of layers of shelves to store unit goods, and uses the corresponding material handling equipment to carry out the warehousing and delivery operations of goods. The main body of the stereoscopic warehouse is composed of shelves, aisle stacking cranes, inbound (outbound) workbenches, and an automatic inbound (outbound) and operation control system.

In the related art, in a chemical production plant for yarn spindle packaging, after the yarn spindle packaging process is completed, the packaged yarn spindles will be stored in a stereoscopic warehouse through a stacker. The stereoscopic warehouse, also known as pallet warehouse or high-bay warehouse, refers to a warehouse that uses several layers, a dozen of layers or even dozens of layers of shelves to store unit goods, and uses the corresponding handling equipment to carry out the warehousing and delivery operations of goods.

In the related art, after the yarn spindles are packaged, the packaged yarn spindles will be transported to the stereoscopic warehouse for storage. However, due to the different production and sales volumes of different yarn spindles, it is difficult to achieve the intelligent management of the stereoscopic warehouse. The management of the stereoscopic warehouse includes warehouse management and delivery management. For the warehouse management, the sales volume of the warehoused yarn spindles can affect the delivery time of the warehoused yarn spindles. If the yarn spindles with better sales volume are warehoused in a storage location far away from the delivery location, the delivery efficiency of the yarn spindles will be relatively low.

In order to at least partially solve one or more of the above problems and other potential problems, the present disclosure proposes a yarn spindle warehouse management method and apparatus. By establishing an intelligent warehouse management mechanism, it is conducive to realizing the intelligent management of warehousing and delivery tasks of yarn spindles, thereby helping to improve the efficiency of delivery and warehousing of yarn spindles.

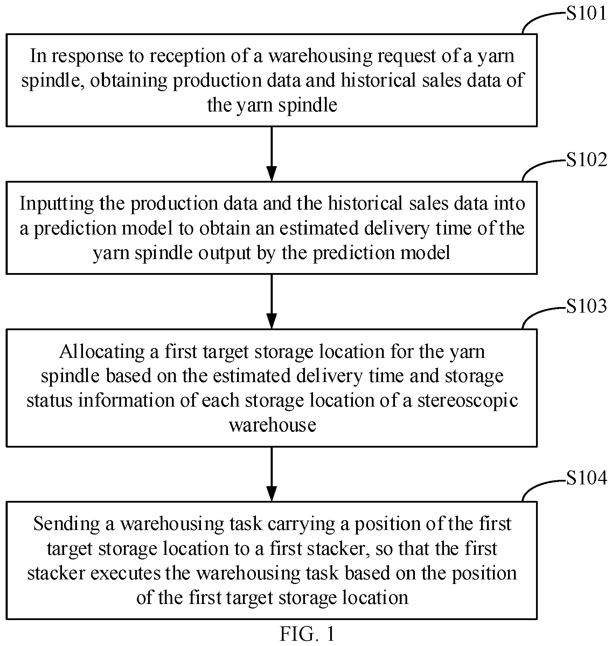

An embodiment of the present disclosure provides a yarn spindle warehouse management method, applied to a warehouse management system. FIG. 1 is a schematic flow chart of the yarn spindle warehouse management method according to the embodiment of the present disclosure. This yarn spindle warehouse management method may be applied to a yarn spindle warehouse management apparatus. This yarn spindle warehouse management apparatus is located on an electronic device in the warehouse management system. In some possible implementations, the yarn spindle warehouse management method may also be implemented by a processor calling a computer-readable instruction stored in a memory. As shown in FIG. 1, the yarn spindle warehouse management method includes:
S101: in response to reception of a warehousing request of a yarn spindle, obtaining production data and historical sales data of the yarn spindle;
S102: inputting the production data and the historical sales data into a prediction model to obtain an estimated delivery time of the yarn spindle output by the prediction model;
S103: allocating a first target storage location for the yarn spindle based on the estimated delivery time and storage status information of each storage location of a stereoscopic warehouse; and
S104: sending a warehousing task carrying a position of the first target storage location to a first stacker, so that the first stacker executes the warehousing task based on the position of the first target storage location, where the warehousing task is used to instruct to store the yarn spindle to the first target storage location.

In the embodiment of the present disclosure, the warehousing request of the yarn spindle is sent by a management device for yarn spindle production to the warehouse management system. The warehousing request of the yarn spindle may include: the type of the yarn spindle to be warehoused, the batch number of the yarn spindle to be warehoused, the number of yarn spindles to be warehoused, other data of the yarn spindle to be warehoused, etc. The above is only an exemplary description and is not intended to limit all possible contents included in the warehousing request of the yarn spindle, but it is not exhaustive here.

Here, the main types of yarns involved in the solution of the embodiment of the present disclosure may include one or more of Partially Oriented Yarns (POY), Fully Drawn Yarns (FDY), Draw Textured Yarns (DTY) (or called low-elastic yarns), etc. For example, the types of yarns may specifically include Polyester Partially Oriented Yarns (POY), Polyester Fully Drawn Yarns (FDY), Polyester Drawn Yarns (PDY), Polyester Draw Textured Yarns (DTY), Polyester Staple Fiber (PSF), etc.

In an embodiment of the present disclosure, the Warehouse Management System (WMS) is a system specifically used for warehouse management, focuses on the efficient task execution and process planning strategy, and can greatly improve the operating efficiency and resource utilization in cooperation with the cargo location management, barcode management and warehouse automation equipment.

In an embodiment of the present disclosure, the warehouse management system can provide functions such as warehouse management, delivery management, transfer management, inventory adjustment, barcode/QR code printing, etc., and support the product batch management, expiration date management, multiple packaging specifications, multiple packaging barcodes, etc., to realize the complete information management of warehouse logistics.

In an embodiment of the present disclosure, the production data may include the production quantity of a certain type of yarn spindles, the production efficiency of a certain type of yarn spindles, the production duration of a certain type of yarn spindles, etc. The above is only an exemplary description and is not intended to limit all possible contents included in the production data, but it is not exhaustive here.

In an embodiment of the present disclosure, the historical sales data refers to sales-related data of a certain type of yarn spindles within a time period. The historical sales data includes but is not limited to: the sales revenue of a certain type of yarn spindles, the sales quantity of a certain type of yarn spindles, the sales channel of a certain type of yarn spindles, etc. In addition, the historical sales data of a certain type of yarn spindles may also be analyzed through other auxiliary tools, such as data visualization, trend analysis, data mining, etc.

In some embodiments, the historical sales data may be obtained through the management device for yarn spindle production, or may be obtained through a data source storing the yarn spindle data. The above is only an exemplary description and is not intended to limit all possible ways of obtaining the historical sales data, but it is not exhaustive here.

In an embodiment of the present disclosure, the warehouse management system can communicate with the management device for yarn spindle production and the stacker. When the warehouse management system communicates with the management device for yarn spindle production, the management device for yarn spindle production can send the production data and historical sales data of the yarn spindles to the warehouse management system; and the warehouse management system can send information such as the storage locations and storage time of the yarn spindles to the management device for yarn spindle production. When the warehouse management system communicates with the stacker, the warehouse management system can send a task to be executed and the task data to the stacker; and the stacker can send the task completion status to the warehouse management system. In this way, the intelligence from yarn spindle production to yarn spindle storage can be improved, helping to improve the efficiency of yarn spindle production and yarn spindle delivery/warehousing.

In some embodiments, the prediction model may make a prediction based on the production data and historical sales data within a first time period, to obtain the production data and sales data within a second time period. The prediction model may be a pre-trained model. Specifically, the training method of the prediction model includes: obtaining the production data and historical sales data of a certain type of yarn spindles within the first time period; inputting the production data and historical sales data of a certain type of yarn spindle within the first time period into a preset model to obtain a sales forecast value of a certain type of yarn spindles within the second time period; constructing a loss function based on the sales forecast value within the second time period and a sales true value within the second time period; and training the preset model based on the loss function to obtain the prediction model. Here, the first time period is earlier than the second time period.

In some embodiments, the estimated delivery time may be determined based on the production data and sales data of yarn spindles. When the production quantity of a certain type of yarn spindles is large and the sales are relatively good, the estimated delivery time of this type of yarn spindles will be faster. When the production quantity of a certain type of yarn spindle is small and the sales are relatively poor, the estimated delivery time of this type of yarn spindles will be slower.

In some embodiments, the storage status information may include: yarn spindles stored in storage locations, yarn spindles not stored in storage locations, batch numbers of yarn spindles stored in storage locations, the number of yarn spindles stored in storage locations, and types of yarn spindles stored in storage locations, etc. The above is only an exemplary description and is not intended to limit all possible contents included in the storage status information, but it is not exhaustive here.

In some embodiments, the first target storage location is a storage location allocated for the warehousing task of the yarn spindle.

In an embodiment of the present disclosure, the stacker is an important handling equipment in the stereoscopic warehouse, and the stacker can store and retrieve goods automatically, quickly and accurately in the stereoscopic warehouse, improving the utilization rate and operation efficiency of the warehouse. The main components of the stacker may include: a fork configured to pick up, transport and stack goods in a warehouse or workshop; a loading platform configured to place goods; a lifting mechanism configured to realize the lifting and lowering operations of goods; a walking mechanism configured to realize the movement of the stacker in the warehouse; and a control system configured to control various operations and actions of the stacker. Here, the fork may be driven electrically or hydraulically, and may be extended and rotated as needed; the loading platform may be made of steel or aluminum alloy, and has sufficient load-bearing capacity and stability; the lifting mechanism may be driven electrically or hydraulically, and has the characteristics of high precision, good stability and good reliability; the walking mechanism may adopt a wheel or track structure, and has the characteristics of fast moving speed and stable operation; and the control system may adopt control elements such as PLC or single-chip microcomputer, and has the characteristics of high automation and easy operation.

In an embodiment of the present disclosure, the warehousing task may refer to transporting a batch of yarn spindles from a production line to a designated storage location in a stereoscopic warehouse; or may refer to transferring a batch of yarn spindles from a storage location in one stereoscopic warehouse to a storage location in another stereoscopic warehouse; or may refer to transferring a batch of yarn spindles from one storage location to another storage location in a stereoscopic warehouse. In order to facilitate the delivery of yarn spindles in the same batch, when the yarn spindles in the same batch are warehoused, multiple yarn spindles in the same batch are stored in multiple storage locations, and the distances between the multiple storage locations are within a certain range.

The technical solution of the embodiment of the present disclosure is as follows: in response to reception of a warehousing request of a yarn spindle, obtaining production data and historical sales data of the yarn spindle; inputting the production data and the historical sales data into a prediction model to obtain an estimated delivery time of the yarn spindle output by the prediction model; allocating a first target storage location for the yarn spindle based on the estimated delivery time and storage status information of each storage location of a stereoscopic warehouse; and sending a warehousing task carrying a position of the first target storage location to a first stacker, so that the first stacker executes the warehousing task based on the position of the first target storage location, where the warehousing task is used to instruct to store the yarn spindle to the first target storage location. In this way, when the yarn spindle is warehoused, the estimated delivery time of the yarn spindle is predicted by the prediction model, and the first target storage location is allocated for the yarn spindle in combination with the estimated delivery time, thus providing strong support for the subsequent rapid delivery of the yarn spindle, and helping to improve the delivery efficiency; and at the same time, since the first target storage location is allocated for each yarn spindle to be warehoused in combination with the estimated delivery time, the reasonability and effectiveness of warehouse management can be improved.

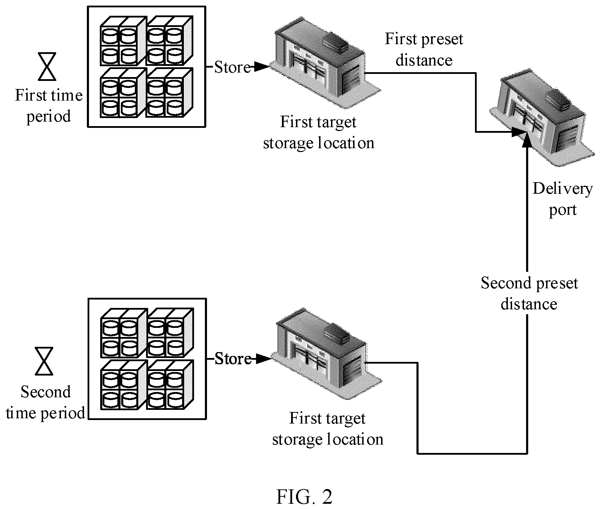

FIG. 2 shows a schematic diagram of allocating the first target storage location for the yarn spindle. As shown in FIG. 2, the step of allocating the first target storage location for the yarn spindle based on the estimated delivery time and the storage status information of each storage location of the stereoscopic warehouse, includes: if the estimated delivery time is within a first time period, allocating the first target storage location for the yarn spindle within a first preset distance range from a delivery port; and if the estimated delivery time is within a second time period, allocating the first target storage location for the yarn spindle within a second preset distance range from the delivery port, where the first time period is earlier than the second time period, and at least some of storage locations within the first preset distance range are closer to the delivery port than at least some of storage locations within the second preset distance range.

In some embodiments, the yarn spindle with the estimated delivery time in the first time period is a yarn spindle that will be delivered faster, and the yarn spindle with the estimated delivery time in the second time period is a yarn spindle that will be delivered more slowly. The first preset distance range is a distance range close to the delivery port; and the second preset distance range is a distance range far from the delivery port.

In some embodiments, if the first time period is within 10 days and the second time period is after 10 days, then there are two batches of yarn spindles (namely, POY yarn spindles with batch number A011 and FDY yarn spindles with batch number B016) that need to be warehoused in the second factory on November 20, 2023; in response to reception of a yarn spindle warehousing request for the POY yarn spindles with batch number A011 and the FDY yarn spindles with batch number B016, the production data and historical sales data of the POY yarn spindles with batch number A011 and the FDY yarn spindles with batch number B016 are obtained; the production data and historical sales data of the POY yarn spindles with batch number A011 and the FDY yarn spindles with batch number B016 are respectively input into the prediction model to obtain the estimated delivery time of the yarn spindles output by the prediction model, that is, the estimated delivery time of the POY yarn spindles with batch number A011 is 8:00 to 20:00 on November 22, 2023, and the estimated delivery time of the FDY yarn spindles with batch number B016 is 8:00 to 18:00 on December 2, 2023; the estimated delivery time of the POY yarn spindles with batch number A011 is in the first time period, and a storage location with 100 meters away from the delivery port is allocated for the POY yarn spindles with batch number A011; and the estimated delivery time of the FDY yarn spindles with batch number B016 is in the second time period, and a storage location with 1000 meters away from the delivery port is allocated for the FDY yarn spindles with batch number B016.

In this way, before the yarn spindles are warehoused, the estimated delivery time thereof is considered based on the production data and historical sales data of the yarn spindles, helping to allocate reasonable storage locations for the yarn spindles to be warehoused, and thereby helping to improve the delivery efficiency of the yarn spindles.

In some embodiments, the step of allocating the first target storage location for the yarn spindle based on the estimated delivery time and the storage status information of each storage location of the stereoscopic warehouse, includes: determining estimated sales volume within a first preset time period according to the historical sales data; determining a delivery probability of the yarn spindle based on the estimated sales volume and the production data; obtaining delivery distances from idle storage locations of the stereoscopic warehouse to a delivery port; and determining a storage location corresponding to a delivery distance matching with the delivery probability as the first target storage location allocated for the yarn spindle.

In some embodiments, if the first preset time period is 30 days, the step of determining the estimated sales volume of the FDY yarn spindles within the first preset time period according to the historical sales data may include: obtaining the historical sales data of the FDY yarn spindles in the first half of the year, where the sales data may include the monthly sales volume of the FDY yarn spindles in the first half of the year, the sales revenue of the FDY yarn spindles, the sales channels of the FDY yarn spindles, etc.; cleaning the historical sales data, i.e. removing abnormal values, missing values and erroneous values, etc., to ensure the accuracy and reliability of the data; performing statistical analysis on the processed historical sales data, where the statistical analysis may include indicators such as average value, median, modal number, variance, standard deviation, etc.; and inputting the processed historical sales data into the prediction model to obtain the estimated sales volume of the FDY yarn spindles for the next month output by the prediction model.

Here, the prediction model may be a linear regression model, an exponential smoothing model, a time series analysis model, etc. The above is only an exemplary description and is not intended to limit all possible types of the prediction model, but it is not exhaustive here.

In some embodiments, when the estimated sales volume of a certain type of yarn spindles output by the prediction model within the first preset time is relatively high and the production volume of this type of yarn spindles is relatively large, the delivery probability of this type of yarn spindles is relatively high, and the delivery probability in the near future is relatively high. When the estimated sales volume of a certain type of yarn spindles output by the prediction model within the first preset time is relatively low and the production volume of this type of yarn spindles is relatively small, the delivery probability of this type of yarn spindles is relatively low, and the delivery probability in the near future is relatively low.

For example, a factory has three batches of yarn spindles that are about to be warehoused, namely, POY yarn spindles with batch number A420, FDY yarn spindles with batch number B420, and DTY yarn spindles with batch number C036; the delivery probabilities of the yarn spindles are determined respectively based on the estimated sales volume and production data of the POY yarn spindles with batch number A420, the FDY yarn spindles with batch number B420 and the DTY yarn spindles with batch number C036, that is, the delivery probability of the POY yarn spindles with batch number A420 is 0.69, the delivery probability of the FDY yarn spindles with batch number B420 is 0.21, and the delivery probability of the DTY yarn spindles with batch number C036 is 0.96; a plurality of idle storage locations (namely, storage location 101, storage location 207, storage location 603 and storage location 720) in the stereoscopic warehouse are obtained, where the distance from the storage location 101 to the delivery port is 100 meters, the distance from the storage location 207 to the delivery port is 200 meters, the distance from the storage location 603 to the delivery port is 600 meters, and the distance from the storage location 720 to the delivery port is 700 meters; the storage location 101 is determined as the first target storage location for the DTY yarn spindles with batch number C036, the storage location 207 is determined as the first target storage location for the POY yarn spindles with batch number A420, and the storage location 720 is determined as the first target storage location for the FDY yarn spindles with batch number B420.

In this way, the storage locations can be reasonably arranged for the yarn spindles based on the delivery probabilities of the yarn spindles and the delivery distances of the idle storage locations, thereby helping to improve the delivery efficiency of the yarn spindles, and thus realizing the intelligent warehouse management.

In some embodiments, the step of determining the estimated sales volume within the first preset time period according to the historical sales data includes: if the historical sales data is sales data for a same period of a previous year, then the estimated sales volume = the sales data for the same period of the previous year × a Gross Domestic Product (GDP) growth rate; or if the historical sales data is average sales data of the previous year, then the estimated sales volume = the average sales data of the previous year × the GDP growth rate.

Exemplarily, the data source of the management device for yarn spindle production stores the historical sales data of the FDY yarn spindles with batch number B420 for the past year, and the historical sales data is 20,000 and the historical average sales data is 25,000; if there is a need to determine the estimated sales volume of the FDY yarn spindles with batch number B420 in the next year, then the estimated sales volume of the FDY yarn spindles with batch number B420 in the next year = 20,000 × GDP growth rate; or the estimated sales volume of the FDY yarn spindles with batch number B420 in the next year = 25,000 × GDP growth rate.

In some embodiments, the step of determining the estimated sales volume within the first preset time period according to the historical sales data further includes: if the historical sales data is sales data for a same period of a previous year, then the estimated sales volume = the sales data for the same period of the previous year × Polyester Price Volatility (PPV); or if the historical sales data is average sales data of the previous year, then the estimated sales volume = the average sales data of the previous year × PPV Here, the PPV refers to polyester price volatility. The polyester is the main raw material for making the dacron, and the dacron is one of the three major synthetic fibers and is the chemical fiber with the world's largest production.

Exemplarily, the data source of the management device for yarn spindle production stores the historical sales data of the FDY yarn spindles with batch number B210 for the past six months, and the historical sales data is 8500 and the historical average sales data is 8000; if there is a need to determine the estimated sales volume of the FDY yarn spindles with batch number B210 in the next year, then the estimated sales volume of the FDY yarn spindles with batch number B210 in the next year = 8500 × PPV; or the estimated sales volume of the FDY yarn spindles with batch number B210 in the next year = 8000 × PPV

In some embodiments, the step of determining the estimated sales volume within the first preset time period according to the historical sales data further includes: if the historical sales data is sales data for a same period of a previous year, then the estimated sales volume = the sales data for the same period of the previous year × Price Fluctuation Rate of Nylon (PFRN); or if the historical sales data is average sales data of the previous year, then the estimated sales volume = the average sales data of the previous year × PFRN. Here, the PFRN refers to price fluctuation rate of nylon. The PFRN measures the degree of change in nylon price and reflects the impact of market supply and demand, policy regulation, international trade and other factors on the nylon price.

Exemplarily, the data source of the management device for yarn spindle production stores the historical sales data of the DTY yarn spindles with batch number C360 for the past six months, and the historical sales data is 8800 and the historical average sales data is 8600; if there is a need to determine the estimated sales volume of the DTY yarn spindles with batch number C360 in the next year, then the estimated sales volume of the DTY yarn spindles with batch number C360 in the next year = 8800 × PFRN; or the estimated sales volume of the DTY yarn spindles with batch number C360 in the next year = 8600 × PFRN.

In this way, the estimated sales volume of yarn spindles can be calculated according to the historical sales data of yarn spindles and the GDP growth rate, and the delivery probability and delivery time of yarn spindles can be predicted by the estimated sales volume, helping to improve the delivery efficiency of the yarn spindles.

In an embodiment of the present disclosure, the yarn spindle warehouse management method further includes: in response to reception of a yarn spindle delivery request, obtaining a batch number and quantity of yarn spindles to be delivered and the storage status information of each storage location of the stereoscopic warehouse, where the yarn spindle delivery request carries the batch number and quantity of the yarn spindles to be delivered; determining at least one second target storage location matching with the quantity based on the storage status information of each storage location of the stereoscopic warehouse and the batch number and quantity of the yarn spindles to be delivered, where the second target storage location stores yarn spindles with the batch number; and sending a delivery task carrying a position of the second target storage location to a second stacker, so that the second stacker executes the delivery task based on the position of the second target storage location, where the delivery task is used to instruct to take out a yarn spindle from the second target storage location and transport the yarn spindle to a delivery port.

In an embodiment of the present disclosure, the yarn spindle delivery request is sent by the warehouse management system to the second stacker. The yarn spindle delivery request may include: the type of the yarn spindle to be delivered, the batch number of the yarn spindle to be delivered, the number of yarn spindles to be delivered, other data of the yarn spindle to be delivered, etc. The above is only an exemplary description and is not intended to limit all possible contents included in the yarn spindle delivery request, but it is not exhaustive here.

Here, the types of the yarn spindles to be delivered include but not limited to: DTY, POY and FDY

In an embodiment of the present disclosure, the second target storage location is a storage location allocated for the yarn spindle delivery task.

In an embodiment of the present disclosure, the delivery task is a task issued by the warehouse management system to a plurality of second stackers. The delivery task is to transport the yarn spindles specified in the yarn spindle delivery request to the delivery port by the plurality of second stackers.

In some embodiments, the yarn spindle delivery request sent by the warehouse management system is obtained, and the yarn spindle delivery request includes: delivering 100 FDY yarn spindles with batch number BOOS that have been warehoused in the 3^{rd} storage location of the 10^{th} floor on the left side of the lane 20, and 150 DTY yarn spindles with batch number A011 that have been warehoused in the 17^{th} storage location of the 21^{th} floor on the right side of the lane 70; determining at least one second target storage location matching with the quantity, i.e., the 3^{rd} storage location of the 10^{th} floor on the left side of the lane 20 and the 17^{th} storage location of the 21^{th} floor on the right side of the lane 70, based on the storage status information of each storage location of the stereoscopic warehouse and the batch number and quantity of the yarn spindles to be delivered; sending a delivery task carrying the position of the second target storage location to a second stacker A, so that the second stacker A transports 100 FDY yarn spindles with batch number BOOS from the 3^{rd} storage location of the 10^{th} floor on the left side of the lane 20 to the delivery port; and sending a delivery task carrying the position of the second target storage location to a second stacker B, so that the second stacker A transports 150 DTY yarn spindles with batch number A011 from the 17^{th} storage location of the 21^{th} floor on the right side of the lane 70 to the delivery port.

In this way, based on the yarn spindle delivery request sent by the delivery management center, there is no need for the delivery management center to determine the second target storage location based on a huge amount of data. The warehouse management system can autonomously determine the storage locations of the yarn spindles to be delivered according to the yarn spindle delivery request, thereby helping to quickly execute the yarn spindle delivery task and further helping to improve the delivery efficiency of the yarn spindles.

In an embodiment of the present disclosure, the yarn spindle warehouse management method further includes: obtaining the storage status information of each storage location of the stereoscopic warehouse and identifiers of yarn spindles stored in non-idle storage locations in a non-delivery time period; predicting estimated delivery time of each yarn spindle stored in the non-idle storage locations through the prediction model; determining a target yarn spindle of which a storage location needs to be adjusted and a final storage location of the target yarn spindle based on the estimated delivery time of each yarn spindle stored in the non-idle storage locations and the storage status information of each storage location of the stereoscopic warehouse; and storing the target yarn spindle to the final storage location of the target yarn spindle.

In some embodiments, the non-delivery time period may be a time period during which the stored yarn spindles are not delivered, for example, the DTY yarn spindles with batch number A011 are warehoused on November 1, 2023 and delivered on November 15, 2023, and then the non-delivery time period for the DTY yarn spindles with batch number A011 is from November 02, 2023 to November 14, 2023; or the non-delivery time period may be a time period during which the yarn spindles are not delivered normally, for example, the delivery time of the DTY yarn spindles with batch number A011 is between 8:00 and 18:00 on November 15, 2023, and then the non-delivery time period for the DTY yarn spindles with batch number A011 may be from 23:00 on November 14, 2023 to 2:00 on November 15, 2023.

In some embodiments, the identifier of the stored yarn spindle may be a serial number, a label, a QR code, etc. of the yarn spindle.

In some embodiments, the non-idle storage location may refer to a storage location where yarn spindles have been stored.

In some embodiments, the final storage location may refer to a storage location where yarn spindles are stored before delivery.

In some embodiments, the estimated delivery time of the DTY yarn spindles with batch number A011 located in the storage location 901 at a factory is 8:00 to 18:00 tomorrow, and the distance from the storage location 901 to the delivery port is 900 meters. In order to complete the delivery task and improve the efficiency of the delivery task, the DTY yarn spindles with batch number A011 located in the storage location 901 are transferred to the idle storage location 101 during the non-delivery time period. The distance from the idle storage location 101 to the delivery port is 100 meters. In this way, the storage locations are flexibly allocated for yarn spindles, helping to improve the delivery efficiency of the yarn spindles.

In some embodiments, two batches of yarn spindles (namely: DTY yarn spindles with batch number A011 and FDY yarn spindles with batch number B205) are warehoused on November 1, 2023 at a factory; the estimated delivery time of the DTY yarn spindles with batch number A011 is predicted as November 5, 2023, and the estimated delivery time of the FDY yarn spindles with batch number B205 is predicted as December 10, 2023, according to the production data and historical sales data of the DTY yarn spindles with batch number A011 and the FDY yarn spindles with batch number B205; the DTY yarn spindles with batch number A011 are stored in the storage location 201, and the FDY yarn spindles with batch number B205 are stored in the storage location 809, according to the estimated delivery time of the DTY yarn spindles with batch number A011 and the estimated delivery time of the FDY yarn spindles with batch number B205; the warehouse management system receives the delivery time (November 17, 2023) of the DTY yarn spindles with batch number A011 and the delivery time (November 7, 2023) of the FDY yarn spindles with batch number B205 on November 3, 2023; and the final storage location of the DTY yarn spindles with batch number A011 is determined as the storage location 809, and the final storage location of the FDY yarn spindles with batch number B205 is determined as the storage location 201, according to the latest delivery time.

In this way, the storage locations where the goods have been stored can be adjusted when no yarn spindle delivery request is received or during the non-delivery time period, facilitating the subsequent rapid delivery, and thereby improving the delivery efficiency of yarn spindles.

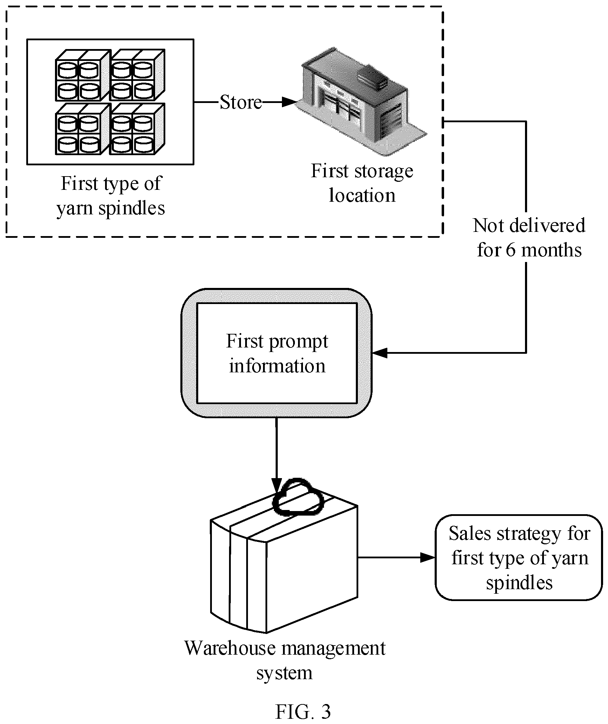

FIG. 3 shows a schematic diagram of a sales strategy for obtaining the first type of yarn spindles. As shown in FIG. 3, the yarn spindle warehouse management method further includes: generating first prompt information in response to monitoring that a duration in which the first type of yarn spindles stored in a first storage location are not delivered reaches a preset threshold; and outputting the first prompt information so that the warehouse management system formulates a sales strategy for the first type of yarn spindles based on the first prompt information.

In some embodiments, the first prompt information may include the warehousing time of the yarn spindles, the delivery time of the yarn spindles, and the storage time of the finished yarn spindles. Exemplarily, the first prompt information is "The storage time of this batch of yarn spindles is 8 months, and it is recommended to process this batch of yarn spindles".

In some embodiments, the preset threshold may be 6 months, 12 months, 15 months, etc. The preset threshold may be set and adjusted according to actual needs.

In some embodiments, the first type of yarn spindles are stock yarn spindles with the storage time exceeding the preset threshold. The first type of yarn spindles may be stored for a longer time period. Therefore, special attention needs to be paid to management and handling. In the warehouse management, the first type of yarn spindles need to be regularly inventoried and sorted, and processed and cleaned in time to avoid waste and loss.

In some embodiments, the sales strategy may include: reducing the price of the first type of yarn spindles, repackaging the first type of yarn spindles, selling the first type of yarn spindles in combination with other yarn spindles, adding some value-added services to the first type of yarn spindles, such as free delivery, etc.

In this way, the first prompt information is generated in response to monitoring that the duration in which the first type of yarn spindles stored in the first storage location are not delivered reaches the preset threshold; and the first prompt information is outputted so that the warehouse management system formulates the sales strategy for the first type of yarn spindles based on the first prompt information, helping to deal with the accumulated goods in time to reduce the loss.

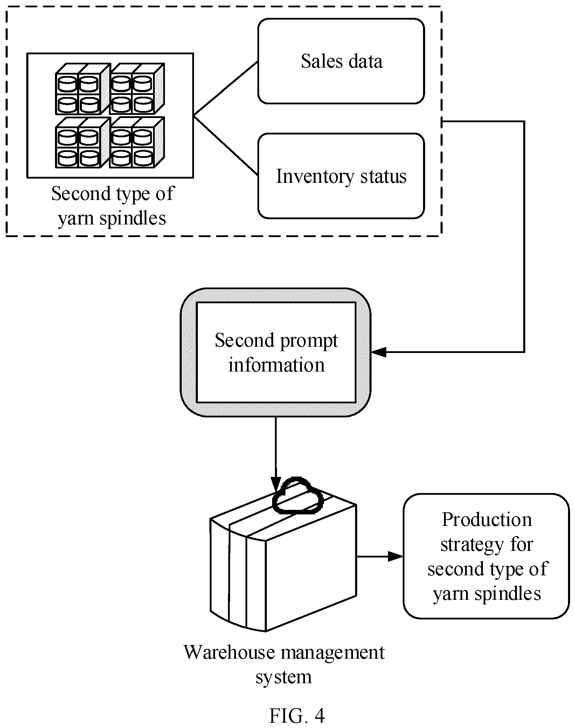

FIG. 4 shows a schematic diagram of a production strategy for obtaining the second type of yarn spindles. As shown in FIG. 4, the yarn spindle warehouse management method further includes: generating second prompt information according to sales data and inventory status of the second type of yarn spindles within a second preset time period; and outputting the second prompt information so that the warehouse management system adjusts a production strategy for the second type of yarn spindles based on the second prompt information.

In some embodiments, the second prompt information may include the warehousing time of the yarn spindles, the delivery time of the yarn spindles, the sales volume of the finished yarn spindles, and the type of the yarn spindles. Exemplarily, the second prompt message is "The sales performance of this batch of yarn spindles is low, and it is recommended to adjust the production strategy".

In some embodiments, the second type of yarn spindles are yarn spindles with lower sales turnover. Therefore, special attention needs to be paid to management and handling. In the warehouse management, the second type of yarn spindles need to be regularly inventoried and sorted, and processed and cleaned in time to avoid waste and loss. Moreover, the production strategy of the second type of yarn spindles needs to be adjusted.

In some embodiments, the production strategy may include: reducing the yield, reducing the production capacity, changing the production batch number, etc.

In this way, the second prompt information is generated according to the sales data and inventory status of the second type of yarn spindles within the second preset time period; and the second prompt information is outputted so that the warehouse management system adjusts the production strategy for the second type of yarn spindles based on the second prompt information, thus adjusting the production strategy of yarn spindles with lower transaction volume in time to reduce the loss.

It should be understood that FIGS. 2 to 4 are only illustrative and not restrictive, and the above schematic diagrams can be adaptively adjusted or changed according to operational requirements, which will not be described again here. Those skilled in the art can make various obvious changes and/or replacements based on the examples of FIGS. 2 to 4, and the obtained technical solutions still belong to the disclosure scope of the embodiments of the present disclosure.

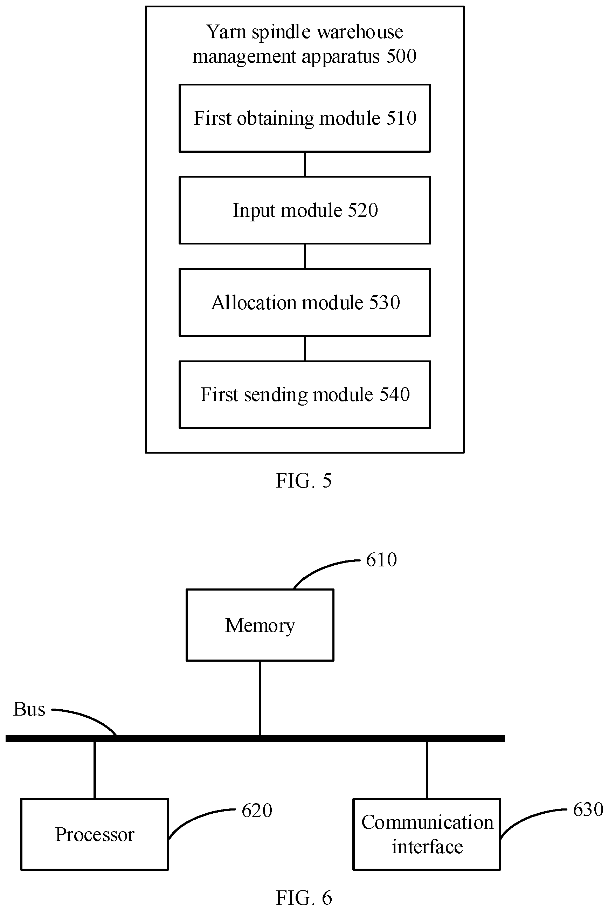

The present disclosure provides a yarn spindle warehouse management apparatus. As shown in FIG. 5, the yarn spindle warehouse management apparatus may include:
a first obtaining module 510 configured to, in response to reception of a warehousing request of a yarn spindle, obtain production data and historical sales data of the yarn spindle;
an input module 520 configured to input the production data and the historical sales data into a prediction model to obtain an estimated delivery time of the yarn spindle output by the prediction model;
an allocation module 530 configured to allocate a first target storage location for the yarn spindle based on the estimated delivery time and storage status information of each storage location of a stereoscopic warehouse; and
a first sending module 540 configured to send a warehousing task carrying a position of the first target storage location to a first stacker, so that the first stacker executes the warehousing task based on the position of the first target storage location, where the warehousing task is used to instruct to store the yarn spindle to the first target storage location.

In some embodiments, the allocation module 530 includes: a first allocation submodule configured to, if the estimated delivery time is within a first time period, allocate the first target storage location for the yarn spindle within a first preset distance range from a delivery port; and a second allocation submodule configured to, if the estimated delivery time is within a second time period, allocate the first target storage location for the yarn spindle within a second preset distance range from the delivery port, where the first time period is earlier than the second time period, and at least some of storage locations within the first preset distance range are closer to the delivery port than at least some of storage locations within the second preset distance range.

In some embodiments, the allocation module 530 includes: a first determining submodule configured to determine estimated sales volume within a first preset time period according to the historical sales data; a second determining submodule configured to determine a delivery probability of the yarn spindle based on the estimated sales volume and the production data; an obtaining submodule configured to obtain delivery distances from idle storage locations of the stereoscopic warehouse to a delivery port; and a third determining submodule configured to determine a storage location corresponding to a delivery distance matching with the delivery probability as the first target storage location allocated for the yarn spindle.

In some embodiments, the first determining submodule is configured to: if the historical sales data is sales data for a same period of a previous year, then the estimated sales volume = the sales data for the same period of the previous year × a GDP growth rate; or if the historical sales data is average sales data of the previous year, then the estimated sales volume = the average sales data of the previous year × the GDP growth rate.

In some embodiments, the yarn spindle warehouse management apparatus further includes: a second obtaining module (not shown in FIG. 5) configured to, in response to reception of a yarn spindle delivery request, obtain a batch number and quantity of yarn spindles to be delivered and the storage status information of each storage location of the stereoscopic warehouse, where the yarn spindle delivery request carries the batch number and quantity of the yarn spindles to be delivered; a first determining module (not shown in FIG. 5) configured to determine at least one second target storage location matching with the quantity based on the storage status information of each storage location of the stereoscopic warehouse and the batch number and quantity of the yarn spindles to be delivered, where the second target storage location stores yarn spindles with the batch number; and a second sending module (not shown in FIG. 5) configured to send a delivery task carrying a position of the second target storage location to a second stacker, so that the second stacker executes the delivery task based on the position of the second target storage location, where the delivery task is used to instruct to take out a yarn spindle from the second target storage location and transport the yarn spindle to a delivery port.

In some embodiments, the yarn spindle warehouse management apparatus further includes: a third obtaining module (not shown in FIG. 5) configured to obtain the storage status information of each storage location of the stereoscopic warehouse and identifiers of yarn spindles stored in non-idle storage locations in a non-delivery time period; a prediction module (not shown in FIG. 5) configured to predict estimated delivery time of each yarn spindle stored in the non-idle storage locations through the prediction model; a second determining module (not shown in FIG. 5) configured to determine a target yarn spindle of which a storage location needs to be adjusted and a final storage location of the target yarn spindle based on the estimated delivery time of each yarn spindle stored in the non-idle storage locations and the storage status information of each storage location of the stereoscopic warehouse; and a storage module (not shown in FIG. 5) configured to store the target yarn spindle to the final storage location of the target yarn spindle.

In some embodiments, the yarn spindle warehouse management apparatus further includes: a first generation module (not shown in FIG. 5) configured to generate first prompt information in response to monitoring that a duration in which a first type of yarn spindles stored in a first storage location are not delivered reaches a preset threshold; and a first output module (not shown in FIG. 5) configured to output the first prompt information so that the warehouse management system formulates a sales strategy for the first type of yarn spindles based on the first prompt information.

In some embodiments, the yarn spindle warehouse management apparatus further includes: a second generation module configured to generate second prompt information according to sales data and inventory status of a second type of yarn spindles within a second preset time period; and a second output module configured to output the second prompt information so that the warehouse management system adjusts a production strategy for the second type of yarn spindles based on the second prompt information.

Those skilled in the art should understand that the functions of the processing modules in the yarn spindle warehouse management apparatus in the embodiments of the present disclosure can be understood with reference to the relevant description of the yarn spindle warehouse management method described above, and the processing modules in the yarn spindle warehouse management apparatus in the embodiments of the present disclosure may be implemented by an analog circuit that implements the functions in the embodiments of the present disclosure or may be implemented by running software that performs the functions in the embodiments of the present disclosure on an electronic device.

The yarn spindle warehouse management apparatus in the embodiments of the present disclosure can establish an intelligent warehouse management mechanism, helping to realize the intelligent management of warehousing and delivery tasks of yarn spindles, and thereby helping to improve the efficiency of delivery and warehousing of yarn spindles.

According to embodiments of the present disclosure, the present disclosure also provides an electronic device and a readable storage medium.

FIG. 6 is a structural block diagram of an electronic device according to an embodiment of the present disclosure. As shown in FIG. 6, the electronic device includes: a memory 610 and a processor 620, and the memory 610 stores a computer program that can run on the processor 620. There may be one or more memories 610 and processors 620. The memory 610 may store one or more computer programs, and the one or more computer programs cause the electronic device to perform the method provided in the above method embodiment, when executed by the electronic device. The electronic device may also include: a communication interface 630 configured to communicate with an external device for data interactive transmission.

If the memory 610, the processor 620 and the communication interface 630 are implemented independently, the memory 610, the processor 620 and the communication interface 630 may be connected to each other and complete communication with each other through a bus. The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the bus is represented by only one thick line in FIG. 6, but this thick line does not represent only one bus or only one type of bus.

Optionally, in a specific implementation, if the memory 610, the processor 620 and the communication interface 630 are integrated on one chip, the memory 610, the processor 620 and the communication interface 630 may communicate with each other through an internal interface.

It should be understood that the above-mentioned processor may be a Central Processing Unit (CPU) or other general-purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, Static RAM (SRAM), Dynamic Random Access Memory (DRAM), Synchronous DRAM (SDRAM), Double Data Date SDRAM (DDR SDRAM), Enhanced SDRAM (ESDRAM), Synchlink DRAM (SLDRAM) and Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

In the description of this specification, it should be understood that the orientations or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axis", "radial", "circumferential", etc. are orientations or position relationships shown based on the drawings, and are only for the purpose of facilitating the description of the present disclosure and simplifying the description, rather than indicating or implying that the device or element referred to must have a particular orientation or be constructed and operated in a particular orientation, and thus should not be construed as the limitation on the present disclosure.

## Claims

1. A yarn spindle warehouse management method, applied to a warehouse management system, **characterized by** comprising:
in response to reception of a warehousing request of a yarn spindle, obtaining production data and historical sales data of the yarn spindle (S101);
inputting the production data and the historical sales data into a prediction model to obtain an estimated delivery time of the yarn spindle output by the prediction model (S 102);
allocating a first target storage location for the yarn spindle based on the estimated delivery time and storage status information of each storage location of a stereoscopic warehouse (S103); and
sending a warehousing task carrying a position of the first target storage location to a first stacker, so that the first stacker executes the warehousing task based on the position of the first target storage location, wherein the warehousing task is used to instruct to store the yarn spindle to the first target storage location (S104).

2. The method of claim 1, wherein the allocating a first target storage location for the yarn spindle based on the estimated delivery time and storage status information of each storage location of a stereoscopic warehouse (S103), comprises:
if the estimated delivery time is within a first time period, allocating the first target storage location for the yarn spindle within a first preset distance range from a delivery port; and
if the estimated delivery time is within a second time period, allocating the first target storage location for the yarn spindle within a second preset distance range from the delivery port, wherein the first time period is earlier than the second time period, and at least some of storage locations within the first preset distance range are closer to the delivery port than at least some of storage locations within the second preset distance range.

3. The method of claim 1, wherein the allocating a first target storage location for the yarn spindle based on the estimated delivery time and storage status information of each storage location of a stereoscopic warehouse (S103), comprises:
determining estimated sales volume within a first preset time period according to the historical sales data;
determining a delivery probability of the yarn spindle based on the estimated sales volume and the production data;
obtaining delivery distances from idle storage locations of the stereoscopic warehouse to a delivery port; and
determining a storage location corresponding to a delivery distance matching with the delivery probability as the first target storage location allocated for the yarn spindle.

4. The method of claim 3, wherein the determining estimated sales volume within a first preset time period according to the historical sales data, comprises:
if the historical sales data is sales data for a same period of a previous year, then the estimated sales volume = the sales data for the same period of the previous year × a GDP growth rate; or
if the historical sales data is average sales data of the previous year, then the estimated sales volume = the average sales data of the previous year × the GDP growth rate.

5. The method of claim 1, further comprising:
in response to reception of a yarn spindle delivery request, obtaining a batch number and quantity of yarn spindles to be delivered and the storage status information of each storage location of the stereoscopic warehouse, wherein the yarn spindle delivery request carries the batch number and quantity of the yarn spindles to be delivered;
determining at least one second target storage location matching with the quantity based on the storage status information of each storage location of the stereoscopic warehouse and the batch number and quantity of the yarn spindles to be delivered, wherein the second target storage location stores yarn spindles with the batch number; and
sending a delivery task carrying a position of the second target storage location to a second stacker, so that the second stacker executes the delivery task based on the position of the second target storage location, wherein the delivery task is used to instruct to take out a yarn spindle from the second target storage location and transport the yarn spindle to a delivery port.

6. The method of claim 1, further comprising:
obtaining the storage status information of each storage location of the stereoscopic warehouse and identifiers of yarn spindles stored in non-idle storage locations in a non-delivery time period;
predicting estimated delivery time of each yarn spindle stored in the non-idle storage locations through the prediction model;
determining a target yarn spindle of which a storage location needs to be adjusted and a final storage location of the target yarn spindle based on the estimated delivery time of each yarn spindle stored in the non-idle storage locations and the storage status information of each storage location of the stereoscopic warehouse; and
storing the target yarn spindle to the final storage location of the target yarn spindle.

7. The method of claim 1, further comprising:
generating first prompt information in response to monitoring that a duration in which a first type of yarn spindles stored in a first storage location are not delivered reaches a preset threshold; and
outputting the first prompt information so that the warehouse management system formulates a sales strategy for the first type of yarn spindles based on the first prompt information.

8. The method of claim 1, further comprising:
generating second prompt information according to sales data and inventory status of a second type of yarn spindles within a second preset time period; and
outputting the second prompt information so that the warehouse management system adjusts a production strategy for the second type of yarn spindles based on the second prompt information.

9. A yarn spindle warehouse management apparatus (500), applied to a warehouse management system, **characterized by** comprising:
a first obtaining module (510) configured to, in response to reception of a warehousing request of a yarn spindle, obtain production data and historical sales data of the yarn spindle;
an input module (520) configured to input the production data and the historical sales data into a prediction model to obtain an estimated delivery time of the yarn spindle output by the prediction model;
an allocation module (530) configured to allocate a first target storage location for the yarn spindle based on the estimated delivery time and storage status information of each storage location of a stereoscopic warehouse; and
a first sending module (540) configured to send a warehousing task carrying a position of the first target storage location to a first stacker, so that the first stacker executes the warehousing task based on the position of the first target storage location, wherein the warehousing task is used to instruct to store the yarn spindle to the first target storage location.

10. A non-transitory computer-readable storage medium storing a computer instruction thereon, wherein the computer instruction is used to cause a computer to execute the method of any one of claims 1 to 8.
